# FASCICULE DE BREVET EUROPEEN

(11) **EP 1 861 266 B1**
(45) Date de publication et mention de la délivrance du brevet: **26.01.2011**
(21) Numéro de dépôt: 06723340.3
(22) Date de dépôt: 10.03.2006
(51) Int. Cl.: B60C 23/04

(54) **PROCÉDÉ DE DÉTECTION D' UN DEFAUT D' ÉMISSION D' UNE UNITÉ ROUE APPARTENANT À UN SYSTÈME DE SURVEILLANCE DE LA PRESSION DES PNEUS**
VERFAHREN ZUR ERFASSUNG EINES ÜBERTRAGUNGSFEHLERS IN BEZUG AUF EINE ZU EINEM REIFENDRUCKÜBERWACHUNGSSYSTEM GEHÖRENDE RADEINHEIT
METHOD OF DETECTING A TRANSMISSION FAULT IN RELATION TO A WHEEL UNIT BELONGING TO A TYRE PRESSURE MONITORING SYSTEM

(30) Priorité: 23.03.2005 FR 0502858
(43) Date de publication de la demande: 05.12.2007
(73) Titulaire: Continental Automotive France, 31100 Toulouse (FR)
(72) Inventeur: ESCARPIT, Valérie, 31470 Fontenilles (FR)
(74) Mandataire: Bonn, Roman Klemens
(86) Numéro de dépôt international: PCT/EP2006/002222
(87) Numéro de publication internationale: WO 2006/099953

(56) Documents cités:
- EP-A- 1 059 177
- WO-A-94/06640

## Description

La présente invention concerne un procédé de détection d'un défaut d'émission d'une unité roue appartenant à un système de surveillance de la pression des pneus. L'invention s'étend également à un dispositif correspondant. Plus particulièrement, un tel système de surveillance de la pression des pneus est appelé à être mis en oeuvre dans un véhicule automobile.

II est déjà connu de munir un véhicule automobile d'un système de surveillance de la pression des pneus. Un tel système permet notamment d'informer le conducteur de toute anomalie. L'information est donnée au conducteur par voie d'affichage sur un écran, par synthèse vocale, par un bip sonore et / ou lumineux etc... ou tout moyen approprié.

A cet effet un système de surveillance de la pression des pneus est classiquement constitué par:
- **une pluralité d'unités roue.** Chaque unité roue est placée à l'intérieur d'un pneumatique du véhicule. Cette unité roue comporte au moins un capteur de température et de pression, (elle peut également comporter un capteur d'accélération ou tout autre capteur approprié), un micro calculateur apte à traiter les signaux reçus de ces capteurs et à les mettre en forme pour émission d'un message par un émetteur radio fréquence.
- **et une unité centrale** placée dans le véhicule automobile et comportant un récepteur radio fréquence unique recevant les émissions en provenance de chaque roue. Cette unité centrale est apte à traiter les messages émis par les unités roues et à informer le conducteur de toute anomalie le cas échéant.

De manière usuelle le message émis par les unités roues contient au moins les valeurs de pression et de température mesurées (éventuellement d'autres paramètres), un code identifiant l'unité roue émettrice, ainsi qu'un certain nombre de données permettant de vérifier la cohérence du message.

Chaque unité roue envoie son message selon un rythme prédéterminé lorsque le véhicule est en déplacement, et à un rythme (généralement moindre) lorsque le véhicule est à l'arrêt. Cependant l'envoi des messages entre différentes unités roues n'est pas coordonné. Ainsi il est possible qu'une ou plusieurs unités roues envoient leurs messages en même temps. Comme le véhicule n'est équipé que d'une seule antenne réceptrice, il y a alors collision des messages et non réception du contenu de ce message, au niveau de l'unité centrale. Or, lorsque l'unité centrale ne reçoit pas de message en provenance d'une roue déterminée pendant un certain laps de temps, elle déclare que cette roue est "muette".

En déclarant une unité roue "muette" alors que ce n'est pas le cas, on crée un défaut inexistant, alors que le défaut réel qui s'avère être un problème de collision de messages n'est pas détecté.

En outre, il est courant que la collision entre l'émission de deux messages se produise sur une période relativement longue, soit parce que les émissions de deux unités roues sont malencontreusement synchronisées, soit parce que le milieu ambiant est perturbé, de manière durable, par un champ électromagnétique puissant (exemple: voiture prés d'une antenne, d'une structure métallique importante, ligne à haute tension etc.) empêchant l'unité centrale de recevoir correctement les messages.

De ce fait il est impossible de savoir avec exactitude si une unité roue est "muette" (c'est à dire si elle présente un réel problème d'émission) ou si elle rencontre des problèmes de collisions de messages (mais fonctionne convenablement par ailleurs).

Le but de la présente invention est donc de détecter, de manière fiable, si une unité roue est muette (c'est à dire si elle n'émet pas).

A cet effet la présente invention propose un procédé de détection d'un défaut d'émission d'une unité roue appartenant à un système de surveillance de la pression des pneus. Un tel système comporte usuellement:
- une pluralité d'unités roue, comportant au moins des moyens de mesures de la pression régnant à l'intérieur du pneu, des moyens de traitement des mesures effectuées et des moyens de mise en forme et d'envoi d'un message contenant au moins les mesures effectuées et un identifiant de l'unité roue, vers une unité centrale,
- et une unité centrale placée dans le véhicule, apte à traiter les messages reçus de chaque unité roue. Le procédé de détention comporte les étapes suivantes :
   - a) émissions de messages par les unités roues,
   - b) réception de ces messages par l'unité centrale munie d'une antenne active présentant une pluralité de lobes de réception chacun apte à recevoir un message en provenance d'une unité roue prédéterminée, , tel que le document de l'art anterieur EP 1059177 le divulgue en accord avec les termes du préamble de la revendication 1.

Selon l'invention le procédé se caractérise en ce qu'il comporte les étapes suivantes:
- c) lorsqu'un lobe a reçu un message en provenance de l'unité roue à laquelle il est associé, désactivation de ce lobe et attente des prochains messages émis pour les lobes restant actifs,
- d) répétition des étapes b) et c) jusqu'à ce que tous les lobes de l'antenne active aient reçus un message,
- e) si au bout d'un laps de temps prédéterminé tous les messages de toutes les unités roues ont été reçus, tous les lobes de réception sont réactivés, dans le cas contraire les unités roues dont les messages n'ont pas été reçus sont comptées "muettes", puis les lobes de réception sont tous réactivés.

Ainsi l'invention consiste à réduire le nombre de lobes de réception actifs d'une antenne réceptrice (comportant une pluralité de lobes) située dans le véhicule, au fur et à mesure que les messages sont reçus. En diminuant le nombre de lobes susceptibles de recevoir un message d'une unité roue, on diminue également les risques de collisions entre les messages émis par les unités roue. En effet, on diminue le nombre de messages pouvant être reçus par l'unité centrale et donc on diminue les risques de collision entre ces messages.

II est à noter que le fait de désactiver un lobe de réception de l'antenne active empêche l'unité centrale de recevoir les messages en provenance de l'unité roue associée à ce lobe. Cependant cette désactivation est temporaire, car elle dure uniquement le temps de recevoir les messages pour les autres lobes de réception actifs. La désactivation est donc de très courte durée et ne dégrade pas les performances de fonctionnement du système de surveillance de la pression des pneus.

L'invention utilise ainsi le principe qu'un message reçu par un lobe de réception de l'unité centrale n'a pas besoin d'être à nouveau reçu au risque de rentrer en collision avec les messages suivants en provenance d'autres unités roues.

Bien entendu, si l'unité centrale ne reçoit pas pendant un laps de temps déterminé de message en provenance d'une unité roue, cette unité roue est comptée "muette", et les lobes de l'antenne active sont réactivés. Il est bien sûr, hors de question, que l'antenne active reste indéfiniment en attente d'un message et de ce fait n'assure plus la réception régulière des messages en provenance des unités roue.

On notera que l'unité roue dont aucun message n'a été reçu est tout d'abord comptée comme "muette". Lorsque cette unité roue est comptée un certain nombre de fois "muette", elle est ensuite déclarée "muette". Cette procédure en deux temps permet de ne pas déclarer "muette" une unité roue qui n'a qu'un problème momentané d'émission ou de collision de messages. Seule sera donc déclarée "muette", une unité roue dont l'unité centrale ne reçoit aucun message depuis un certain temps et ceci bien que le procédé de réduction de collisions selon l'invention soit mis en oeuvre. Dans ce cas là, on peut en effet être pratiquement sûr que la non réception de messages est due à une non émission et non à un problème de collisions.

L'invention s'étend également à un dispositif mettant en oeuvre le procédé de détection selon l'invention. Plus particulièrement, ce dispositif comporte une antenne active multilobée à lobes de réception commandés.

L'antenne active est en outre positionnée dans le véhicule de manière toujours identique de telle sorte qu'un lobe défini couvre toujours une zone déterminée du véhicule.

A cet effet, l'antenne active est munie de moyens détrompeurs, permettant sa mise en place dans le véhicule selon une position prédéterminée, quel que soit le véhicule.

Avantageusement, le procédé de détection selon l'invention permet également de localiser les unités roues sur le véhicule. En effet comme chaque lobe de l'antenne active couvre de manière spécifique une roue donnée (avant gauche, avant droite, arrière gauche, arrière droite, ...), lorsqu'un lobe reçoit le message de l'unité roue à laquelle il est associé, il suffit de mémoriser le numéro identifiant de cette unité roue (présent dans le message émis) et de lui associer la zone couverte par le lobe, pour localiser chaque unité roue sur le véhicule.

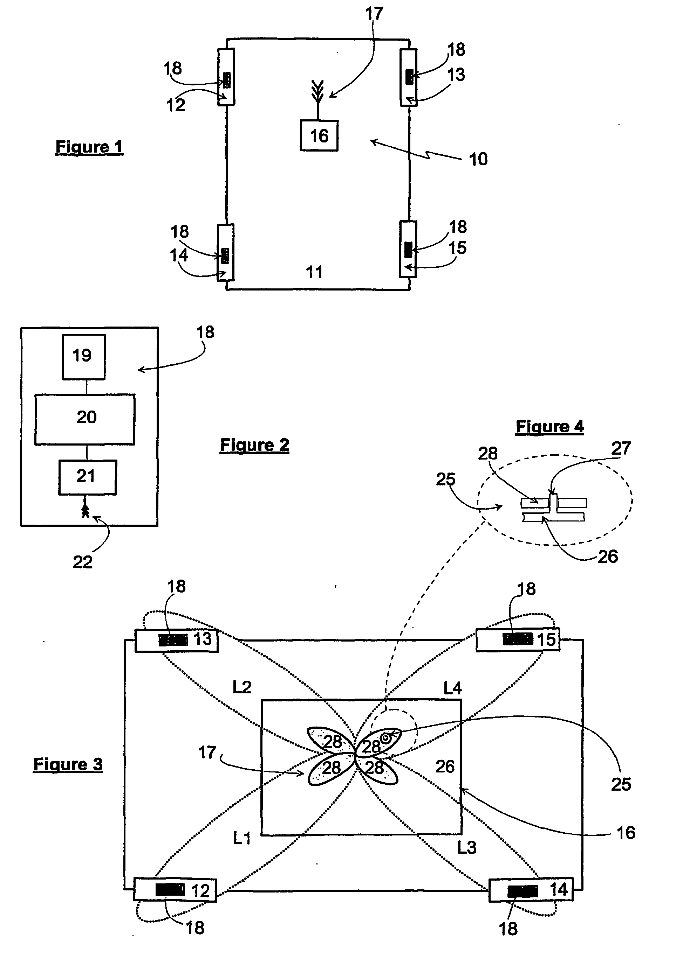

D'autres objets, caractéristiques et avantages de la présente invention ressortiront d'ailleurs de la description qui suit, à titre d'exemple non limitatif, en référence aux dessins annexés dans lesquels:
- **La** **figure 1** est une vue schématique de dessus, représentant un véhicule muni d'un système de surveillance de la pression des pneus selon l'invention,
- **La** **figure 2** est une vue schématique d'une unité roue selon l'invention,
- **La** **figure 3** est une vue schématique représentant un véhicule muni d'une unité centrale comportant une antenne active selon l'invention, et
- **La** **figure 4** est une vue à échelle agrandie du détail référencé 25 à la figure 3.

Selon la forme de réalisation représentée aux figures 1 à 4, le système 10 de surveillance de la pression des pneus selon l'invention est monté sur un véhicule 11, muni de quatre roues 12 à 15. Dans chacun des pneumatiques de ce véhicule, une unité roue 18 (figures 1 et 2) est mise en place.

Cette unité roue 18 comporte au moins un capteur de pression et de température 19. Elle pourrait également comporter d'autres types de capteurs (par exemple des accéléromètres, ...). L'unité roue comporte également un microprocesseur 20, apte à traiter les signaux mesurés par les capteurs et à les mettre en forme pour les émettre, via un émetteur radio fréquence 21 et une antenne 22, vers le véhicule. Le message ainsi émis vers le véhicule contient au moins les valeurs de pression et de température mesurées (éventuellement d'autres paramètres), un code identifiant l'unité roue émettrice, ainsi qu'un certain nombre de données permettant de vérifier la cohérence du message.

Le système de surveillance de la pression des pneus selon l'invention comporte en outre une unité centrale 16 (figure 1) située dans le véhicule. Cette unité centrale est munie d'une antenne active 17, dite antenne multilobée à lobes commandés. Cette antenne est constituée, dans l'exemple représenté (voir figure 3), de quatre branches 28, recevant chacune les signaux radio fréquence émis par tout dispositif émetteur situé dans un lobe (L1 à L4) associé. Chacun de ces lobes recouvre une zone bien définie du véhicule. Ainsi le lobe L1 recouvre la roue 12 (avant gauche), le lobe L2 recouvre la roue 13 (avant droite), le lobe L3 recouvre la roue 14 (arrière droite) et le lobe L4 recouvre la roue 15 (arrière droite).

Quel que soit le véhicule on s'arrange pour que les lobes L1 à L4 recouvrent ainsi toujours les roues 12 à 15, dont le positionnement est connu. A cet effet l'antenne 17 est munie de moyens détrompeurs 25 (figures 3 et 4) permettant de la placer rigoureusement dans la même position par rapport au véhicule. Ces moyens détrompeurs 25 (mieux visibles à la figure 4) peuvent par exemple être réalisés sous la forme d'un ergot 27 réalisé dans le support 26 de l'antenne (généralement un circuit imprimé) et coopérant avec une encoche réalisée dans une des branches 28 de l'antenne 17. Ainsi, si la bonne branche de l'antenne n'est pas mise en place devant l'ergot, celui-ci ne peut coopérer avec l'encoche et il est alors impossible de placer l'antenne active sur son circuit imprimé.

Bien entendu tout autre moyen détrompeur peut être utilisé.

Le procédé de détection d'un défaut d'émission d'une unité roue selon l'invention consiste après émission de message par les unités roues à:
- recevoir ces messages au niveau de l'unité centrale (16) munie, à cet effet d'une antenne active (17) présentant une pluralité de lobes de réception (L1 à L4) chacun apte à recevoir les messages en provenance d'une unité roue (18) prédéterminée,
- désactiver un lobe (L1 à L4) lorsque celui-ci a reçu un message en provenance de l'unité roue (18) à laquelle il est associé, et attendre des prochains messages émis pour les lobes restant actifs,
- répéter les étapes de réception et de désactivation jusqu'à ce que tous les lobes de l'antenne active aient reçus leurs messages,
- réactiver les lobes de réception désactivés lorsqu'un laps de temps prédéterminé s'est écoulé ou si tous les messages de toutes les unités roues ont été reçus. Dans le cas où toutes les unités roues n'ont pas été reçues compter les unités roue non reçues comme "muettes" et réactiver tous les lobes.

Lorsqu'une unité roue n'a pas été reçue pendant un nombre prédéterminé de fois, c'est à dire lorsqu'elle a été comptée "muette" un certain nombre de fois, cette unité roue est déclarée "muette".

La désactivation de chaque lobe de réception, après réception d'un message en provenance de l'unité roue associée est réalisée par tout moyen approprié, par exemple à l'aide d'un interrupteur commandé.

Le procédé selon l'invention est par exemple mis en oeuvre de la manière suivante.

Tous les lobes de réception de l'antenne active sont activés. Suite à un message envoyé par l'unité roue 18 de la roue 13, le lobe L2 reçoit un message. Ce message est traité par l'unité centrale 16 et le lobe L2 est désactivé. Les messages en provenance des roues 12 et 15 (lobes L1 et L4) entrent en collision et l'unité centrale ne peut traiter aucun de ces messages. Le message en provenance de la roue 12 (lobe L1) est finalement reçu. Ce lobe L1 est désactivé. Seuls les lobes L3 et L4 demeurent actifs. Les messages en provenance des roues 12 et 15 ne peuvent plus entrer en collision. Les messages en provenance des roues 14 et 15 sont alors reçus sans collision (c'est à dire séquentiellement) et traités. L'ensemble des messages ayant été reçus, les quatre lobes sont alors réactivés. Le compteur de roue "muette" n'est pas incrémenté, puisque les messages en provenance de toutes les unités roue ont été reçus.

Le mode de mise en oeuvre donné ci-dessus n'a bien sûr été indiqué qu'à titre d'illustration et la séquence d'activation et de désactivation des lobes de réception peut être différente de celle décrite sans pour autant sortir du domaine de l'invention. Dans le cas ci-dessus illustré aucune unité roue n'a de problème d'émission.

La présente invention concerne également un dispositif de détection mettant en oeuvre une antenne active à lobes de réception commandés.

On notera que le procédé et le dispositif selon l'invention permettent également de localiser les différentes unités roue sur le véhicule. En effet, comme chaque lobe de réception de l'antenne active reçoit les émissions en provenance d'une roue déterminée, il suffit lorsqu'un lobe reçoit un message en provenance de l'unité roue à laquelle il est associé de mémoriser le numéro identifiant de l'unité roue. Ainsi si c'est le lobe L1 qui reçoit le message comportant le numéro identifiant de l'unité roue, on sait que cette unité roue est celle montée dans la roue 12 (avant gauche). On mémorise alors le numéro identifiant reçu, comme étant celui de la roue avant gauche. On procède de la même façon pour chacune des autres unités roue.

Bien entendu, la présente invention n'est pas limitée au mode de réalisation décrit à titre d'exemple. Ainsi l'antenne 17 peut présenter un nombre de lobes de réception différent de quatre. En outre la forme des branches de l'antenne n'est pas limitée à celle représentée. Toute antenne à lobes de réception actifs peut être utilisée.

## Revendications

1. Procédé de détection d'un défaut d'émission d'une unité roue appartenant à un système de surveillance de la pression des pneus, le dit système comportant:
- une pluralité d'unités roue (18), comportant au moins des moyens de mesures (19) de la pression régnant à l'intérieur du pneu, des moyens de traitement (20) des mesures effectuées et des moyens de mise en forme (21) et d'envoi (22) d'un message contenant au moins les mesures effectuées et un identifiant de l'unité roue, vers une unité centrale (16),
- et une unité centrale (16) placée dans le véhicule (11), apte à traiter les messages reçus de chaque unité roue (18),
le dit procédé de détection comportant les étapes suivantes:
- a) émissions de messages par les unités roues (18),
- b) réception de ces messages par l'unité centrale (16) munie d'une antenne active (17) présentant une pluralité de lobes de réception (L1 à L4) chacun apte à recevoir un message en provenance d'une unité roue (18) prédéterminée.
Le dit procédé étant **caractérisé par** les étapes suivantes :
- c) lorsqu'un lobe (L1 à L4) a reçu un message en provenance de l'unité roue (18) à laquelle il est associé, désactivation de ce lobe et attente des prochains messages émis pour les lobes restant actifs,
- d) répétition des étapes b) et c) jusqu'à ce que tous les lobes de l'antenne active aient reçus un message,
- e) si au bout d'un laps de temps prédéterminé tous les messages de toutes les unités roues ont été reçus, tous les lobes sont réactivés, dans le cas contraire les unités roues dont les messages n'ont pas été reçus sont comptées "muettes" puis les lobes sont tous réactivés.

2. Procédé de détection selon la revendication 1, **caractérisé en ce que** pour être déclarée "muette" une unité roue (18) doit avoir été comptée "muette" un nombre prédéterminé de fois.

3. Procédé de détection selon la revendication 1 ou 2, **caractérisé en ce que** l'antenne active (17) présente au moins quatre lobes de réception.

4. Procédé de détection selon l'une quelconque des revendications précédentes, **caractérisé en ce que** lors de l'étape c) la désactivation du lobe de l'antenne active est réalisée par un interrupteur commandé.

5. Procédé de détection selon l'une quelconque des revendications précédentes, **caractérisé en ce qu'**il consiste en outre à localiser chaque unité roue (18) en mémorisant dans l'unité centrale (16) l'identifiant de l'unité roue correspondant à chacun des lobes de réception (L1 à L4) de l'antenne active.

## Claims

1. Method for detecting a transmission fault of a wheel unit belonging to a tyre pressure monitoring system, said system comprising:
a plurality of wheel units (18), comprising at least means (19) for measuring the pressure prevailing inside the tyre, means (20) for processing the measurements performed and means for shaping (21) and for dispatching (22) a message containing at least the measurements performed and an identifier of the wheel unit, to a central control unit (16),
- and a central control unit (16) placed in the vehicle (11), able to process the messages received from each wheel unit (18),
said detection method comprising the following steps:
a) transmissions of messages by the wheel units (18),
b) reception of these messages by the central control unit (16) provided with an active antenna (17) having a plurality of reception lobes (L1 to L4) each able to receive a message originating from a predetermined wheel unit (18),
said detection method being **characterised by** the following steps:
c) when a lobe (L1 to L4) has received a message originating from the wheel unit (18) with which it is associated, deactivation of this lobe and standby for the next messages transmitted for the lobes that remain active,
d) repetition of steps b) and c) until all the lobes of the active antenna have received a message,
e) if after a predetermined time span all the messages of all the wheel units have been received, all the lobes are reactivated, in the converse case the wheel units whose messages have not been received are counted "mute" and then the lobes are all reactivated.

2. Detection method according to claim 1, **characterised in that** to be declared "mute" a wheel unit (18) must have been counted "mute" a predetermined number of times.

3. Detection method according to claim 1 or claim 2, **characterised in that** the active antenna (17) has at least four reception lobes.

4. Detection method according to one of the preceding claims, **characterised in that** during step c) the deactivation of the lobe of the active antenna is carried out by a controlled switch.

5. Detection method according to one of the preceding claims, **characterised in that** it furthermore consists in locating each wheel unit (18) by storing in the central control unit (16) the identifier of the wheel unit corresponding to each of the reception lobes (L1 to L4) of the active antenna.

## Patentansprüche

1. Verfahren zur Erfassung eines Übertragungsfehlers in Bezug auf eine zu einem Reifendrucküberwachungssystem gehörende Radeinheit, wobei das System Folgendes umfasst:
- eine Mehrheit Radeinheiten (18), die zumindest Mittel zum Messen (19) des Drucks umfassen, der im Inneren des Reifens herrscht, Mittel zum Verarbeiten (20) der erfolgten Messungen und Mittel zum Formen (21) und Versenden (22) einer Mitteilung, die mindestens die erfolgten Messungen und eine Kennung für die Radeinheit enthält, an eine Zentraleinheit (16)
- und eine Zentraleinheit (16), die im Fahrzeug (11) angeordnet und dafür geeignet ist, die Mitteilungen, die von jeder Radeinheit (18) empfangen werden, zu verarbeiten,
wobei das Erfassungsverfahren folgende Schritte umfasst:
- a) Übertragen von Mitteilungen durch die Radeinheiten (18),
- b) Empfangen dieser Mitteilungen durch die Zentraleinheit (16), die mit einer aktiven Antenne (17) versehen ist, die mehrere Empfangskeulen (L1 bis L4) aufweist, die jeweils in der Lage sind, eine Mitteilung zu empfangen, die von einer bestimmten Radeinheit (18) stammt,
wobei das Verfahren durch folgende Schritte **gekennzeichnet** ist:
- c) wenn eine Keule (L1 bis L4) eine Mitteilung empfangen hat, die von der Radeinheit (18) stammt, der sie zugehörig ist, Deaktivieren dieser Keule und Warten auf die nächsten Mitteilungen, die für die aktiv bleibenden Keulen übertragen werden,
- d) Wiederholen der Schritte b) und c), bis alle Keulen der aktiven Antenne eine Mitteilung empfangen haben,
- e) wenn am Ende eines vorbestimmten Zeitraums alle Mitteilungen sämtlicher Radeinheiten empfangen worden sind, werden alle Keulen erneut aktiviert, ansonsten werden die Radeinheiten, von denen keine Mitteilungen empfangen wurden, als "stumm" gezählt und anschließend werden alle Keulen erneut aktiviert.

2. Verfahren zur Erfassung nach Anspruch 1, **dadurch gekennzeichnet, dass** eine Radeinheit (18), um als "stumm" erklärt zu werden, mit einer bestimmten Häufigkeit als stumm gezählt worden sein muss.

3. Verfahren zur Erfassung nach Anspruch 1 oder 2, **dadurch gekennzeichnet, dass** die aktive Antenne (17) mindestens vier Empfangskeulen aufweist.

4. Verfahren zur Erfassung nach einem der vorhergehenden Ansprüche, **dadurch gekennzeichnet, dass** in Schritt c) das Deaktivieren der Keule der aktiven Antenne durch einen gesteuerten Schalter erfolgt.

5. Verfahren zur Erfassung nach einem der vorhergehenden Ansprüche, **dadurch gekennzeichnet, dass** es ferner darin besteht, die Lage jeder Radeinheit (18) zu bestimmen, indem in der Zentraleinheit (16) die Kennung für die Radeinheit, die jeder Empfangskeule (L1 bis L4) der aktiven Antenne entspricht, zu speichern.
